# EUROPEAN PATENT APPLICATION

(11) **EP 2 657 617 A1**
(43) Date of publication of application: **30.10.2013**
(21) Application number: 13161023.0
(22) Date of filing: 26.03.2013
(51) Int. Cl.: F24D 5/12, F24D 17/02, F24D 19/10, F24D 17/00

(54) **Plant for air-conditioning rooms and simultaneously heating sanitary water contained in a storage tank**

(30) Priority: 28.03.2012 IT MI20120500
(71) Applicant: Argoclima S.p.A., 21013 Gallarate (VA) (IT)
(72) Inventor: Nocivelli, Paolo, 21013 Gallarate (VA) (IT)
(74) Representative: Raimondi, Margherita

(57) **Abstract**

Plant for air-conditioning rooms and simultaneously heating sanitary hot water contained in a storage tank (20), comprising a first circuit (100) for the production of a hot coolant; a third circuit (300) for recirculating water to/from a storage tank (20); a second circuit (200,1200) for transferring the heat from the hot coolant to the sanitary water, arranged between said first circuit (100) for production of the coolant and said third circuit (300) for recirculating the water and comprising at least one heat exchanger (150,250;1150); the first circuit (100) for production of the hot coolant comprising an air-conditioning apparatus provided with at least one internal unit (30) for air-conditioning a room; an external unit (10) which has a single compressor (11) and is of the mono/multisplit, DC inverter type; the first circuit (100) for production of the hot coolant being provided with a hydraulic port (101, 102) formed by a first line (101) for delivery of the hot coolant, the opposite ends of which are respectively connected to the outlet of the compressor (11) and to the inlet of the second circuit (200,1200) for transferring the heat and a second line (102) for return of the hot coolant from the second circuit (200,1200) for transferring the heat from the hot coolant to the water and connected to the inlet of the four-way valve (12) of the external unit (10).

## Description

The present invention relates to a plant for air-conditioning rooms and simultaneously heating sanitary hot water contained in a storage tank.

It is known in the technical sector relating to control of the internal temperature of rooms that the same air-conditioning machines are able to perform both cooling and heating by means of use as a heat pump.

It is also known that, in view of the high efficiency of heat pumps and the fact that the cost of electric energy is now more or the less the same as that of gas, there is an increasing need to integrate air-conditioning devices which may be used as heat pumps, with the production of hot sanitary water and using alternative heat generating sources.

For this purpose it is also known that there are apparatus comprising a heat pump, by means of which a coolant is heated inside the machine and conveyed inside heat exchangers which are also supplied with mains cold water which is thus heated and stored in storage containers.

Although performing their function, these apparatus nevertheless have a number of drawbacks arising in particular from the necessity to use storage containers designed and constructed depending on the specific use needed to achieve optimization of the heat efficiency and integration in the control system.

This means that complex installation work is required, this resulting on the one hand in considerable inconvenience, in particular when the work is carried out in private dwellings and, on the other hand, in the discontinued use of any electric boiler(s) which may already be present at the installation site, which become redundant and with time deteriorate precisely because they are not used.

EP 2,184,563 also discloses the possibility of arranging, between an external conditioning unit and a tank containing sanitary water to be heated, means for producing heat in order to heat the water using the external conditioning unit; this solution envisages, however, two cooling circuits respectively for managing the internal units for air-conditioning the rooms and for generating the heat intended for the sanitary water, each of the two circuits using their own coolant and their own compressor in order to obtain the heat for heating the water both during the cooling cycle and during the heating cycle as heat pump.

This solution therefore results in the need to use complicated and costly hydraulic circuitry in order to obtain the desired effect, as well as two different coolants with different condensation/vaporization temperatures, thus rendering extremely complex both the design of the apparatus, which must comprise two compressors, and the management and maintenance thereof. The technical problem which is posed, therefore, is that of developing a plant which, using an apparatus for air-conditioning rooms, is able to produce sanitary hot water with a high efficiency, while limiting to the absolute minimum the number of heat generating components for heating said sanitary water.

In connection with this problem, it is also required that this plant should be able to be integrated with different thermal energy sources such as, for example, solar panels and the like, having small dimensions, being simple and inexpensive to manufacture and assemble and being able to be installed easily at any user premises with the aid of normal standardized connection means, making use also, where possible, of the storage containers (boilers) already present at the place of use, without the need to install new containers and associated special installations.

These results are obtained according to the present invention by a plant for air-conditioning rooms and heating sanitary water contained in a storage tank according to the characteristic features of Claim 1. Further details may be obtained from the following description of non-limiting examples of embodiment of the subject of the present invention provided with reference to the accompanying drawings in which:
Figure 1: is a functional diagram of a first example of embodiment of the plant according to the present invention;
Figure 2: is a functional diagram of a second example of embodiment of the plant according to the present invention;
Figure 3: is a functional diagram of a third example of embodiment of the plant according to the present invention;
Figure 4: is a functional diagram of a fourth example of embodiment of the plant according to the present invention;
Figure 5: is the functional diagram of the components of the plant according to the invention, including a detail of the air-conditioning apparatus, in cooling operation mode; and
Figure 6: is the functional diagram of the components of the plant according to the invention, including a detail of the air-conditioning apparatus, in operation mode as a heat pump.

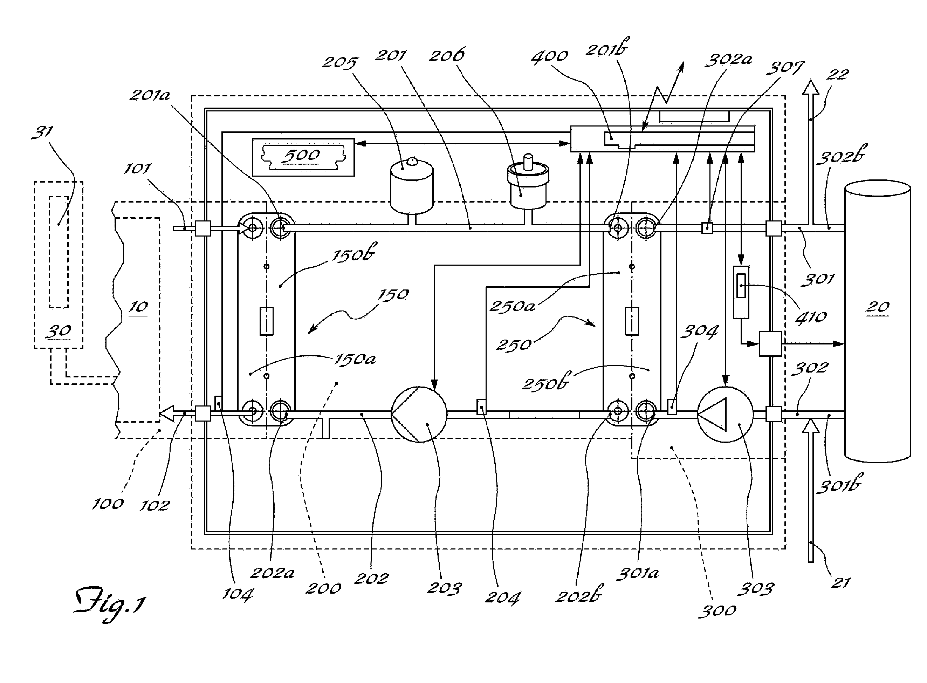

As shown, the plant for air-conditioning rooms and heating sanitary water contained in a storage tank 20, using an external unit 10 of an air-conditioning apparatus designed to operate as heat pump, essentially comprises three complex operating circuits consisting of:
- a first circuit 100 for production of a hot coolant;
- a third circuit 300 for recirculating water to/from a storage tank, which may also consist of a conventional boiler;
- a second circuit 200 for transferring the heat from the hot coolant to the sanitary water, arranged between said first circuit 100 for production of the coolant and said third circuit 300 for recirculating the water.
   In greater detail and with reference to Figs. 1, 5 to 6,
- the first circuit 100 for production of the hot coolant comprises:
   a) an air-conditioning apparatus comprising:
      - at least one internal unit 30 for air-conditioning a room;
      - an external unit 10 of the so-called mono/multi-split type, namely designed to operate equally well with a single internal unit or a plurality of internal units and known for example from EP 2,369,257 in the name of the same present Applicant, the full text of which is referred to here;

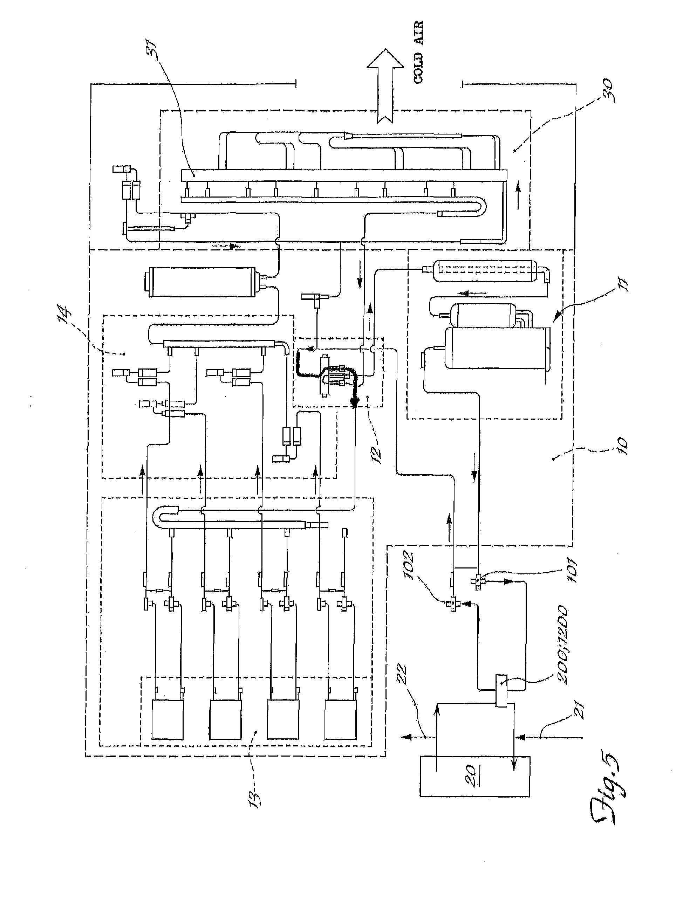

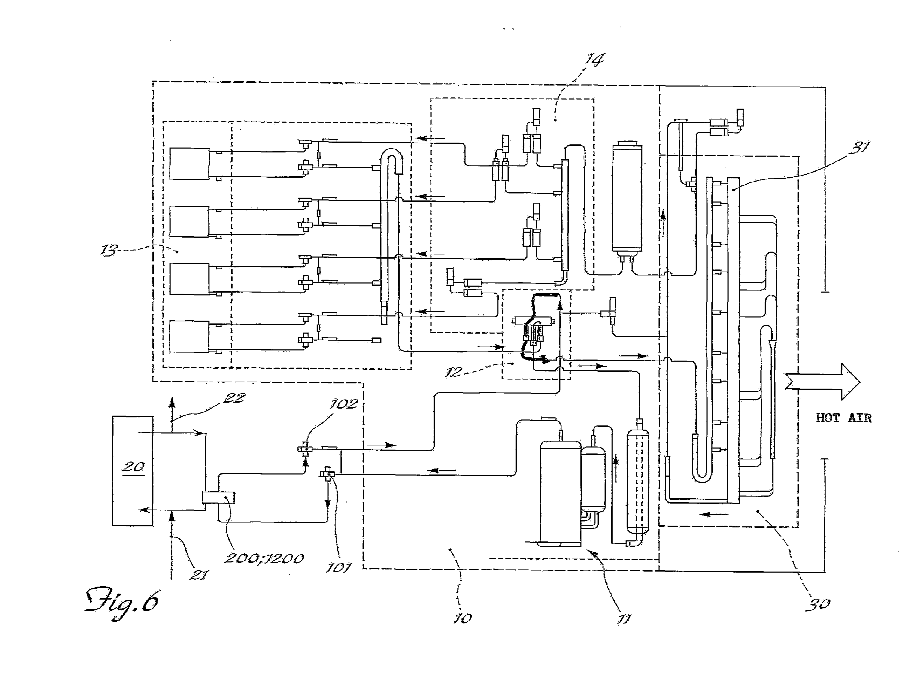

As shown in Figs. 5 and 6, the external unit 10 also comprises:
- a compressor 11 supplied with the coolant in the gaseous state from heat exchangers 31 of the at least one internal unit 30 or from the heat exchanger 13 of the external unit, depending on whether the air-conditioning apparatus is working using a cycle for cooling or heating the internal room, the compressor 11 outputting a high-temperature and high-pressure coolant;
- a four-way valve 12 designed to send, in a conventional manner, the high-pressure and high-temperature coolant alternately to the heat exchanger 13 of the external unit or to the heat exchanger 31 of the at least one internal unit 30, depending on whether the air-conditioning apparatus is working using a cycle for cooling or heating the internal room;
   the external unit is moreover of the so-called DC inverter type, namely with a compressor controlled by an inverter which modulates operation thereof on the basis of the actual need, without switching-off and therefore without repeated start-up cycles; in addition to this, as shown in Figs. 5, 6 the heat exchanger 13 may be split up into multiple sections connected to respective expansion valves 14 for allowing modulation of the supply of the fluid to heat exchangers 31 of different internal units 30 according to the actual demand thereof.

The first circuit 100 moreover has:
b1) a first line 101 for delivery of the hot coolant, the opposite ends of which are connected respectively to the outlet of the compressor 11 and to the inlet of a heat exchanger 150,1150 forming part of the second circuit 200, described in detail below; and
b2) a second line 102 for return from the heat exchanger 150,1150, the other end of which is connected to the inlet of the four-way valve 12.

Said first delivery line 101 and second return line therefore form a hydraulic port for supplying hot coolant to said second circuit 200 for transferring the heat from the hot coolant to the sanitary water.

With reference to the embodiment shown in Figure 1, said second circuit 200 for transferring the heat from the hot coolant to the sanitary water forms a circuit for recirculating a hot intermediate fluid and comprises: two heat exchangers 150 and 250 with two sections 150a,150b and 250a,250b, respectively, arranged between the first circuit 100 for producing and the second circuit 200 for recirculating the intermediate fluid and between the second circuit 200 and the third circuit 300 for recirculating the water, as will emerge more clearly below.

In this way the fluid, via a delivery line 101, enters the first section 150a of the first heat exchanger 150 from which it exits via the return line 102; a temperature sensor 104 for measuring the temperature of the circulating gas is inserted along the return line; - a first end 201a of a delivery line 201 of the circuit 200 for recirculating the intermediate fluid enters into the second section 150b of the first heat exchanger 150 and a first end 202a of a return line 202 exits therefrom; the two sections 150a,150b of the first exchanger have a counterflow arrangement so that recirculation of the hot fluid from the top downwards, as per the orientation of the figures, releases heat to the water which recirculates with counterflow in the other section.

The ends 201a,201b of the delivery line 201 and return line 202 of the circuit for recirculating the intermediate fluid, opposite to the ends connected to the first heat exchanger 150, are in turn connected to the first section 250a of the second heat exchanger 250. The circuit 200 for recirculating the hot intermediate fluid also comprises a pump 203 and a flow switch 204 arranged in series and upstream of the pump along the return line 202 as well as an expansion vessel 205 and a breather valve 206 arranged in series along the delivery line 201.

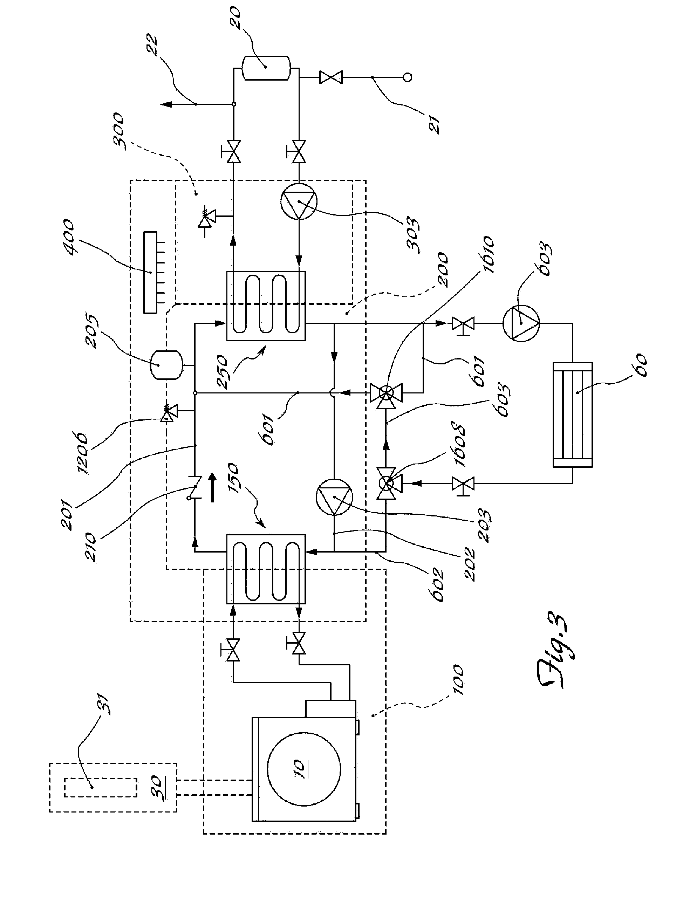

According to a preferred embodiment (Fig. 3) the breather valve is a safety valve 1206 for the pressure of the circuit.

The third circuit 300 for recirculating the water of the water storage container 20 envisages a hot water delivery line 301 connected to the user appliances by means of a branched line 22 and a cold water return line connected to an inlet branch 21 for the mains water; the opposite respective ends 301a,302a and 301b,302b of the delivery and return lines are respectively connected to the second section 250b of the second exchanger 250 and to the water storage container 20.

A pump 303 and a temperature sensor 304, in series and upstream of the pump, are installed along the return line 302, while a pressure switch 307 is inserted along the delivery line.

According to the invention it is envisaged that all the detection parts (flow switch 104, sensors 204,304; pressure switch 307) and actuating parts (pumps 203,303, external unit 10) are connected by means of respective electrical and data lines (shown but not numbered in the figures) to a programming and control unit 400 comprising a CPU, programming data memories, power circuits for driving the various controlled devices so as to perform operational control of the various parts of the plant; the programming and control unit 400 is preferably associated with a user interface device 500 provided with a read display and a keyboard for interaction with the control board itself.

Preferably a remote-control switch 410 is associated with the water storage container 20, being connected to the internal resistance of the storage container so that the programming and control unit 400 may directly control activation/deactivation of the resistance itself both for a heat increase which may be required and for performing anti-legionella cycles.

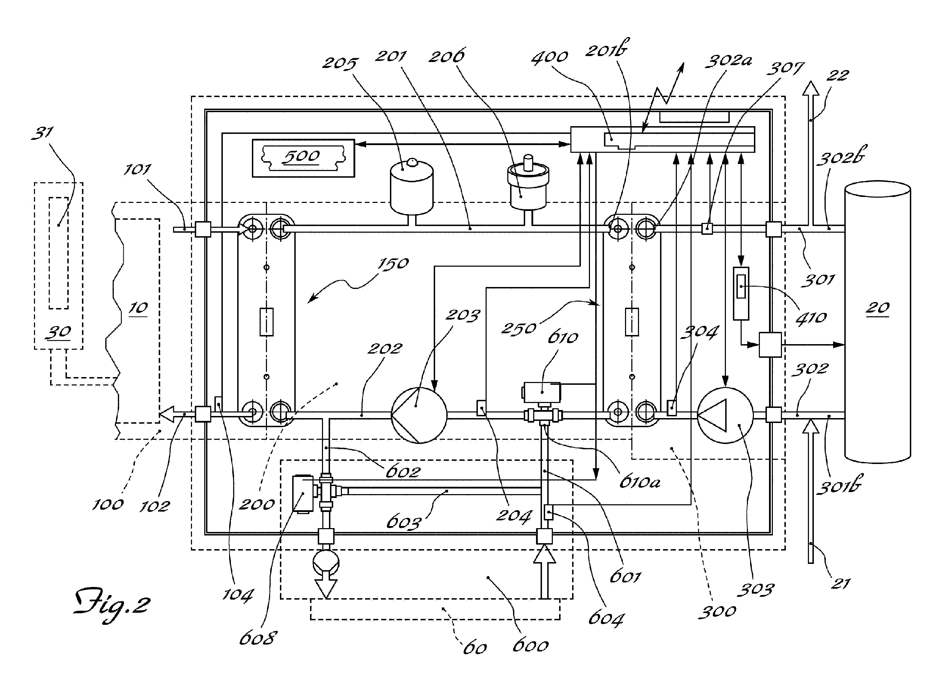

As shown in Fig. 2, it is envisaged that the plant according to the invention may also be connected to an auxiliary circuit 600 connected to a heat source 60, of the solar panel or similar type, which uses the same intermediate heating fluid also used by the second recirculating circuit 200 of the plant according to the invention.

According to the invention it is also envisaged that the heat source of the auxiliary circuit may be another source of hot water, i.e. a hot propylene/thermodynamic glycol.

In this case a delivery line 601 from the external circuit is provided and is connected to the inlet 610a of a three-way valve 610, the other openings of which intercept the return line 202 of the circuit for recirculation of the intermediate fluid.

The delivery line 601 is branched off by means of a transverse branch 603 connected to the return line 602 via a mixing valve 604 so as to control the flow of hot fluid of the auxiliary circuit.

An associated temperature sensor 604 connected to the programming and control unit 400 is also arranged along the delivery line 601.

It is also envisaged that the line 101 for delivery of the hot cooling gas is connected immediately downstream of the compressor according to the "desuperheater principle" in order to use the sensitive heat of the gas superheated following compression; it is thus possible to obtain heating of the fluid of the intermediate circuit and therefore of the water contained in the storage tank also when the external unit operates in cooling mode and not in heat pump mode.

As shown in Fig. 3 a further embodiment of the auxiliary circuit 600 of the plant is envisaged; in this case the delivery line 601 of the auxiliary circuit is connected to the delivery line 201 of the recirculating circuit 200 and is intercepted by a first three-way valve 1610 also connected to the first end of the branched line 603, the other end of which is connected to a second three-way valve 1608 also connected to the return line 602 of the auxiliary circuit 600 and to the return line 202 of the recirculating circuit 200.

A non-return valve 210 is also inserted along the delivery line 201 of the recirculating circuit, downstream of the first heat exchanger 150.

With this configuration, operation of the circuit takes place as follows:
- if the assistance of the auxiliary circuit is not required, the two three-way valves 1610 and 1608 are closed off from the recirculating circuit 200 and recirculate the fluid along the auxiliary circuit 600 without interfering with the recirculating circuit 200;
- if the assistance of the auxiliary circuit is required to heat the water of the water storage container 20, the second valve 1608 is opened towards the first valve 1610 and the latter is opened towards the delivery line 201 of the recirculating circuit 200; in this way, the auxiliary hot fluid enters directly at the top of the first section 250a of the second heat exchanger 250, increasing its temperature so as to obtain greater heating of the water which circulates in the second section 250b of the said exchanger; the cooled auxiliary fluid then returns directly to the pump 603 for renewed heating in the solar panels;
- if the intermediate fluid of the recirculating circuit 200 also requires further heating, the first valve 1610 is closed off from the branch section 603 and the second valve 1608 is opened towards the first heat exchanger 150; in this way the auxiliary fluid enters into the first heat exchanger, being added to the recirculating fluid, passes through the non-return valve 210 of the delivery line 201 and enters into the second heat exchanger 250, returning directly to the solar panels 600 via the pump 603.

Operation of the plant remains unvaried, but the components are simpler compared to the second embodiment described above.

For the purposes of simpler illustration and description the diagram in Fig. 3 does not show the detection and control devices which are nevertheless included in the plant as already described in connection with Figs. 1 and 2.

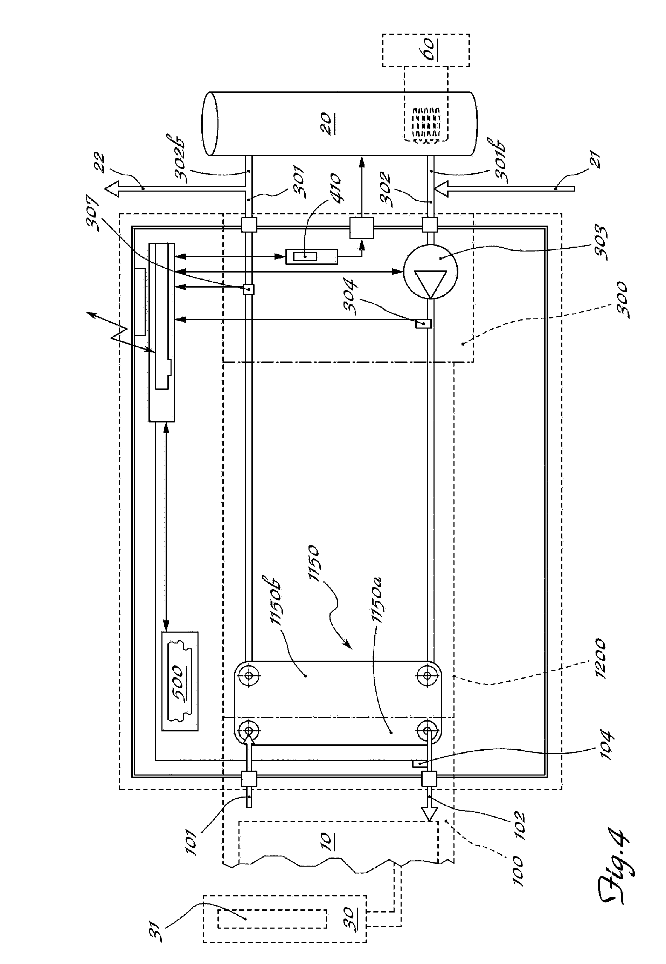

As shown in Figure 4, it is envisaged that:

The circuit 1200 for transferring heat from the hot coolant to the sanitary water comprises a single plate-type heat exchanger 1150 of the double-wall type which prevents contamination of the water also in the case of losses due to malfunctioning or perforation of the exchanger itself.

In this configuration, the heat transfer circuit is considerably simplified, allowing elimination of the following: the pump 203 for recirculating the intermediate fluid, the second heat exchanger 250, the flow switch 204, the expansion vessel 205 and breather valve 206, the dual forced circulation of the hot coolant on the one hand and of the sanitary water on the other hand via the single double-wall heat exchanger 1150 being performed by the external unit 10 and the pump 303, respectively; all the components for programming, control, distribution of the temperature and flowrate of the fluids and water being those already described for the preceding embodiments.

In this case also it is possible to supply heat to the sanitary water by means of alternative energy sources such as solar panels 60, which in this case are directly connected to the water storage container 20, thereby achieving further simplification of the hydraulic circuits, it being no longer required to manage the interference with the fluid of the second circuit 200 by means of the various components of the aforementioned auxiliary circuit 600 connected to the heat source 60. It is therefore clear how with the plant according to the invention it is possible to obtain hot sanitary water by means of an air-conditioning machine which can be used also as heat pump and using the standard commercially available storage tanks already present at the installation premises or which can be acquired at a low cost since they are of the standard type; all of which without the need for installing new special conveying lines and/or storage containers as in the prior art.

It is also clear how with the plant it is possible to heat sanitary water using a single air-conditioning circuit with a single compressor and a single coolant, both for operation in cooling mode and for operation in heat pump mode (heating).

Although not shown, it is also envisaged that the plant may operate correctly in order to generate heat for heating the sanitary water also in conditions where the internal units are non-operative or in a stand-by condition, since it is not required to air-condition the internal room; in this situation the plant control system switches to operation in heat pump mode and the heat exchanger 150;1150 of the transfer circuit 200 performs both the function performed by the exchanger of the internal units in heating mode and the function of transmitting heat to the sanitary water or to the intermediate fluid.

In addition, owing to the possibility of connecting the plant to alternative energy sources, the user is able to achieve significant energy savings in addition to the savings due to the high efficiency levels which can be achieved with the plant according to the invention.

It has in fact been shown experimentally that, with the plant according to the invention, heating 80 litres of water contained in a storage tank with a 1600 W resistance to a temperature of 52°C took half the time and consumed less than half the energy compared to heating performed using only the internal resistance of the boiler.

Finally it should be pointed out that, owing to the design consisting of three circuits and two plate-type exchangers or a single double-wall exchanger, it is possible to achieve "safe" separation between the coolant of the external unit and the sanitary water which will never be contaminated by any gas leakages.

By applying the principle of desuperheating the hot coolant it is also possible to achieve a temperature of the water of up to 80°C which is completely thermodynamic in nature, i.e. without use of the electrical resistance in the boiler. By connecting the hot coolant delivery line 101 immediately downstream of the compressor of the external unit of the air-conditioning apparatus the desuperheating principle may be fully exploited.

Although described in connection with certain constructional forms and certain preferred examples of embodiment of the invention, it is understood that the scope of protection of the present patent is defined solely by the following claims.

## Claims

1. Plant for air-conditioning rooms and simultaneously heating sanitary hot water contained in a storage tank (20), comprising:
- a first circuit (100) for the production of a hot coolant;
- a third circuit (300) for recirculating water to/from a storage tank (20);
- a second circuit (200,1200) for transferring the heat from the hot coolant to the sanitary water, arranged between said first circuit (100) for production of the coolant and said third circuit (300) for recirculating the water and comprising at least one heat exchanger (150,250;1150); and
- a programming and control unit (400) connected to the detection devices (104,204,304), actuating devices (203, 303) and intercepting devices (610) arranged along the lines of said first circuit (100), second circuit (200,1200) and third circuit (300);
wherein:
the first circuit (100) for production of the hot coolant comprises:
a) an air-conditioning apparatus comprising:
- at least one internal unit (30) for air-conditioning a room;
- an external unit (10) comprising:
• a single compressor (11) supplied with the coolant in the gaseous state from heat exchangers (31) of the at least one internal unit (30) or from the heat exchanger (13) of the external unit, depending on whether the air-conditioning apparatus is working using a cycle for cooling or heating the internal room;
• a four-way valve (12) for sending the hot high-pressure coolant output from the compressor (11) alternately to the heat exchanger (13) of the external unit or to the heat exchanger (31) of the at least one internal unit (30), depending on whether the air-conditioning apparatus is working using a cycle for cooling or heating the internal room;
**characterized in that**
said external unit (10) is of the mono/multi-split, DC inverter type; and that
the first circuit (100) for the production of hot coolant comprises:
a hydraulic port (101, 102) comprising:
b1) a first line (101) for delivery of the hot coolant, the opposite ends of which are respectively connected to the outlet of the compressor (11) and to the inlet of the second circuit (200,1200) for transferring the heat;
b2) a second line (102) for return of the hot coolant from the second circuit (200,1200) for transferring the heat from the hot coolant to the water and connected to the inlet of the four-way valve (12).

2. Plant according to Claim 1, **characterized in that** said second circuit (200) for transferring the heat from the hot coolant to the water is a circuit (200) for recirculating a hot intermediate fluid and comprises a first heat exchanger (150) for absorbing heat from the intermediate fluid and a second heat exchanger (250) for releasing the heat to the third circuit (300) for recirculating the sanitary water of the storage tank (20)

3. Plant according to Claim 2, **characterized in that** said first heat exchanger (150) and second heat exchanger (250) comprise a respective first section (150a,250a) and a second section (150b,250b) for recirculating the respective fluid.

4. Plant according to Claim 2, **characterized in that** said circuit (101) for delivery of the hot coolant is connected to the inlet of the first section (150a) of the first heat exchanger (150) and that the return line (102) is connected to the outlet by the same first section of the first heat exchanger (150).

5. Plant according to Claim 3, **characterized in that** a temperature sensor (104) is inserted along the return line (102) for the cold coolant.

6. Plant according to Claim 2, **characterized in that** the second circuit (200) for recirculating the intermediate fluid comprises an intermediate-fluid delivery line (201), along which a pump (203) and a flow switch (204) are arranged, said flow switch being arranged in series with and upstream of the pump.

7. Plant according to Claim 6, **characterized in that** a non-return valve (210) is also arranged, downstream of the first heat exchanger (150), along the delivery line (201) of the recirculating circuit (200).

8. Plant according to Claim 2, **characterized in that** an expansion vessel (205) and a breather valve (206;1206) arranged in series are arranged along the delivery line (201) of the circuit (200) for recirculating the intermediate fluid.

9. Plant according to Claim 8, **characterized in that** the breather valve is a safety valve (1206) for the pressure in the circuit.

10. Plant according to Claim 1, **characterized in that** said third circuit (300) for recirculating the water of the storage tank (20) has a hot water delivery line (301), the respective opposite ends (301a,302a) and (301b,302b) of which are respectively connected to the second circuit (200,1200) for transferring the heat from the hot coolant to the water and to the storage tank (20), the delivery line being connected to the user appliances via a branched line (22) and the cold water return line being connected to a mains water inlet branch (21).

11. Plant according to Claims 3 and 10, **characterized in that** the ends (301a,302a) and (301b,302b) of said line (301) for delivery of the hot water of the third circuit (300) for recirculating the water of the storage tank (20) are respectively connected to the second section (250b) of the second exchanger (250) of the second heat transfer circuit (200) and to the storage tank (20).

12. Plant according to Claim 10, **characterized in that** a pump (303) and a temperature sensor (304), in series with and upstream of the pump, are installed along the return line (302), and a pressure switch (307) is inserted along the delivery line.

13. Plant according to Claim 1, **characterized in that** the programming and control unit (400) is associated with a user interface device (500) provided with a read display and a keyboard for interaction with the said programming and control unit.

14. Plant according to Claim 1, **characterized in that** a remote-control switch connected to an internal resistance of the storage tank is associated with the programming and control unit (400).

15. Plant according to Claim 2, **characterized in that** the circuit (200) for recirculating the intermediate fluid is connected to an auxiliary circuit (600) of an external heat source (60) of the solar panel, hot thermodynamic fluid or similar type.

16. Plant according to Claim 15, **characterized in that** the second circuit (200) for recirculating the intermediate fluid and the auxiliary circuit (600) use the same type of fluid.

17. Plant according to Claim 16, **characterized in that** said auxiliary circuit (600) comprises a delivery line (601) coming from the external circuit and connected to the inlet (610a) of a three-way valve (610), the other openings of which intercept the return line (202) of the circuit (200) for recirculating the intermediate fluid.

18. Plant according to Claim 16, **characterized in that** the delivery line (601) of the auxiliary circuit (600) is branched off via a transverse branch (603) connected to the return line (602) of the same auxiliary circuit (600) via a mixing valve (604).

19. Plant according to Claim 16, **characterized in that** said auxiliary circuit (600) comprises a delivery line (602) coming from the external circuit and connected to the return line (202) of the recirculating circuit (200) via a first three-way valve (1610) also connected to the first end of a branched line (603), the other end of which is connected to a second three-way valve (1608) arranged along the return line (602) of the auxiliary circuit.

20. Plant according to Claim 19, **characterized in that** the delivery line (601) of the auxiliary circuit (600) is branched off via a transverse branch (603), the opposite ends of which are respectively intercepted by the first three-way valve (1210) and second three-way valve (1608).

21. Plant according to Claim 15, **characterized in that** a temperature sensor (604) connected to the programming and control unit (400) is arranged along the delivery line (601) of the auxiliary circuit (600).

22. Plant according to Claim 1, **characterized in that** the heat removed downstream of the compressor of the external unit (10) of the air-conditioning apparatus is desuperheating heat of the hot high-pressure coolant.

23. Plant according to Claim 1, **characterized in that** the circuit (1200) for transferring the heat from the hot coolant to the sanitary water comprises a single plate-type heat exchanger (1150) of the double-wall type.

24. Plant according to Claim 24, **characterized in that** the heat exchanger (1150) comprises a first section (1150a) and a second section (1150b) for recirculating respectively the hot coolant and the water of the storage container (20).

25. Plant according to Claim 25, **characterized in that** said circuit (101) for delivery of the hot coolant is connected to the inlet of the first section (1150a) of the heat exchanger (1150) and that the return line (102) is connected to the outlet of the same first section of the heat exchanger (1150).

26. Plant according to Claims 10 and 24, **characterized in that** the twin forced circulation of the hot coolant on the one hand and the sanitary water on the other hand through the single double-wall heat exchanger (1150) is performed by the external unit (10) and by the pump (303) respectively.

27. Plant according to Claim 24, **characterized in that** it comprises an auxiliary circuit (600) of an external heat source (60) of the solar panel, hot thermodynamic fluid or similar type, directly connected to the water storage container (20).

28. Plant according to Claim 1, **characterized in that** the heat exchanger (13) is split up into multiple sections connected to respective expansion valves (14) for allowing modulation of the supply of the fluid to heat exchangers (31) of different internal units (30) according to the actual demand thereof.

29. Plant according to Claim 1, **characterized in that**, in conditions where the internal units are not operative or on standby, the control means (400) switch the external unit (10) into heat pump mode and the heat exchanger (150;1150) of the transfer circuit (200) connected to the hydraulic port carries out both the function performed by the exchanger of the internal units (30) in heating mode and the function of heat transmission to the intermediate fluid or the sanitary water.
